# EUROPEAN PATENT APPLICATION

(11) **EP 4 246 195 A1**
(43) Date of publication of application: **20.09.2023**
(21) Application number: 21891912.4
(22) Date of filing: 10.11.2021
(51) Int. Cl.: G02B 6/02, G02B 6/44

(54) **OPTICAL FIBER CABLE**

(30) Priority: 11.11.2020 JP 2020187985
(71) Applicant: SUMITOMO ELECTRIC INDUSTRIES, LTD., Osaka-shi, Osaka 541-0041 (JP); Nippon Telegraph And Telephone Corporation, Chiyoda-ku Tokyo 100-8116 (JP)
(72) Inventor: HASHIMOTO, Yutaka, Osaka-shi, Osaka 541-0041 (JP); SATO, Fumiaki, Osaka-shi, Osaka 541-0041 (JP); KIKUCHI, Masashi, Musashino-shi, Tokyo 180-8585 (JP); SAKURAI, Akira, Musashino-shi, Tokyo 180-8585 (JP); YAMADA, Yusuke, Musashino-shi, Tokyo 180-8585 (JP)
(74) Representative: Müller-Boré & Partner Patentanwälte PartG mbB
(86) International application number: PCT/JP2021/041387
(87) International publication number: WO 2022/102666

(57) **Abstract**

In an optical fiber cable in which an optical fiber ribbon formed by parallelly arranging a plurality of optical fibers is packaged in an internal space, a core portion of each optical fiber is made of pure quartz and an effective cross-sectional area of the core portion at a wavelength of 1,550 nm is 110 µm² or more and 150 µm² or less. The optical fiber ribbon is an optical fiber ribbon in which the optical fibers are connected by continuously applying an adhesive resin between adjacent optical fibers. An occupation ratio of the optical fiber ribbon to the internal space calculated from a ratio of a cross-sectional area of the internal space to a cross-sectional area of the packaged optical fiber ribbon is 25% or more and 55% or less.

## Description

### TECHNICAL FIELD

The present disclosure relates to an optical fiber cable.

This application claims priority based on Japanese Application No. 2020-187985 filed on November 11, 2020, and incorporates all the contents described in the Japanese Application.

### BACKGROUND ART

Patent Literature 1 describes an optical fiber cable in which an optical fiber ribbon is accommodated in an SZ stranded slot rod. In the optical fiber cable, in order to reduce a diameter of the optical fiber cable while ensuring favorable transmission characteristics without increasing loss, the optical fiber ribbon is intermittently formed with a connecting portion and a non-connecting portion in a longitudinal direction between adjacent optical fibers. An occupation ratio of the optical fiber ribbon calculated from a cross-sectional area of the optical fiber ribbon with respect to a cross-sectional area of a slot groove is 35% or more and 60% or less.

Patent Literature 2 describes an optical fiber cable in which optical fiber ribbons are accommodated in a slot rod having a plurality of slot grooves. In the optical fiber cable, in order to package optical fibers at high density, an outer diameter dimension of the optical fiber is 0.22 mm or less, and the optical fiber ribbon is intermittently formed with a connecting portion and a non-connecting portion in a longitudinal direction between adjacent optical fibers. A density of the optical fibers is set to 4.8 fibers/mm² or more in a cross section of the optical fiber cable.

Patent Literature 3 describes an optical fiber cable accommodating an optical unit in which optical fiber ribbons each of which is configured with a plurality of optical fibers are collected in a slot rod having a plurality of grooves. In the optical fiber cable, even when the optical fiber ribbons are packaged in the grooves at high density, the optical unit is accommodated in the groove in a stranded state in order to suppress occurrence of macro bend loss. An occupation ratio of the optical unit calculated from a cross-sectional area of the optical unit with respect to a cross-sectional area of the groove is 25% or more and 60% or less.

### CITATION LIST

### PATENT LITERATURE

Patent Literature 1: JP2014-211511A
Patent Literature 2: JP2017-223730A
Patent Literature 3: JP2017-32749A

### SUMMARY OF INVENTION

An optical fiber cable according to an aspect of the present disclosure is,
an optical fiber cable in which an optical fiber ribbon formed by parallelly arranging a plurality of optical fibers is packaged in an internal space, in which
a core portion of each optical fiber is made of pure quartz and an effective cross-sectional area of the core portion at a wavelength of 1,550 nm is 110 µm² or more and 150 µm² or less,
the optical fiber ribbon is an optical fiber ribbon in which the optical fibers are connected by continuously applying an adhesive resin between adjacent optical fibers, and
an occupation ratio of the optical fiber ribbon to the internal space calculated from a ratio of a cross-sectional area of the internal space to a cross-sectional area of the packaged optical fiber ribbon is 25% or more and 55% or less.

An optical fiber cable according to another aspect of the present disclosure is,
an optical fiber cable in which an optical fiber ribbon formed by parallelly arranging a plurality of optical fibers is packaged in an internal space, in which
a core portion of each optical fiber is made of pure quartz and an effective cross-sectional area of the core portion at a wavelength of 1,550 nm is 110 µm² or more and 150 µm² or less,
the optical fiber ribbon is an intermittent connection type optical fiber ribbon in which the optical fibers are connected by intermittently applying an adhesive resin between adjacent optical fibers, and
an occupation ratio of the optical fiber ribbon to the internal space calculated from a ratio of a cross-sectional area of the internal space to a cross-sectional area of the packaged optical fiber ribbon is 25% or more and 60% or less.

### BRIEF DESCRIPTION OF DRAWINGS

FIG. 1 is a cross-sectional view illustrating an optical fiber cable according to a first embodiment.
FIG. 2 is a cross-sectional view of an optical fiber accommodated in the optical fiber cable illustrated in FIG. 1.
FIG. 3 is a cross-sectional view illustrating an optical fiber cable of a modification example.
FIG. 4 is a plan view of an optical fiber ribbon accommodated in an optical fiber cable according to a second embodiment.

### DESCRIPTION OF EMBODIMENTS

### (Problems to be Solved by Present Disclosure)

In order to cope with shift to a next-generation mobile communication system and increase in signal capacity due to increase in video information, the need for an optical fiber cable capable of efficiently transmitting a signal is increasing. In order to meet such needs, there is room for improvement in a configuration of an optical fiber cable as disclosed in Patent Literatures 1 to 3. In particular, in order to input high-power optical signals, it is desirable to increase an effective cross-sectional area of the optical fiber, but there is a problem that loss tends to increase when density of optical fibers having a large effective area is increased.

An object of the present disclosure is to provide an optical fiber cable capable of suppressing transmission loss, inputting a high-power optical signal, and accommodating optical fiber ribbons at high density.

### (Description of Embodiments of Present Disclosure)

First, embodiments of the present disclosure are listed and described.

An optical fiber cable according to an aspect of the present disclosure is,
(1) an optical fiber cable in which an optical fiber ribbon formed by parallelly arranging a plurality of optical fibers is packaged in an internal space, in which
   a core portion of each optical fiber is made of pure quartz and an effective cross-sectional area of the core portion at a wavelength of 1,550 nm is 110 µm² or more and 150 µm² or less,
   the optical fiber ribbon is an optical fiber ribbon in which the optical fibers are connected by continuously applying an adhesive resin between adjacent optical fibers, and
   an occupation ratio of the optical fiber ribbon to the internal space calculated from a ratio of a cross-sectional area of the internal space to a cross-sectional area of the packaged optical fiber ribbon is 25% or more and 55% or less.

According to this configuration, since the core portion of the optical fiber is made of pure quartz, transmission loss can be suppressed. Also, since the effective cross-sectional area of the core portion in the optical fiber is large, it is possible to input high-power optical signals. Further, by setting the occupation ratio of the optical fiber ribbon to the internal space to 25% or more and 55% or less, even when the effective cross-sectional area of the core portion is increased, the optical fiber ribbon can be accommodated at high density while maintaining favorable transmission characteristics.

Pure quartz is quartz that does not contain dopants, but it is allowed to contain some impurities as long as the impurities do not affect the characteristics.

An optical fiber cable according to another aspect of the present disclosure is,
(2) an optical fiber cable in which an optical fiber ribbon formed by parallelly arranging a plurality of optical fibers is packaged in an internal space, in which
   a core portion of each optical fiber is made of pure quartz and an effective cross-sectional area of the core portion at a wavelength of 1,550 nm is 110 µm² or more and 150 µm² or less,
   the optical fiber ribbon is an intermittent connection type optical fiber ribbon in which the optical fibers are connected by intermittently applying an adhesive resin between adjacent optical fibers, and
   an occupation ratio of the optical fiber ribbon to the internal space calculated from a ratio of a cross-sectional area of the internal space to a cross-sectional area of the packaged optical fiber ribbon is 25% or more and 60% or less.
   Since the intermittent connection type optical fiber ribbon is more flexible than the non-intermittent connection type optical fiber ribbon, it is possible to increase the occupation ratio of the optical fiber ribbon to the internal space while maintaining suppression of transmission loss and possibility of inputting high-power optical signals.
(3) The optical fiber cable according to (1) or (2) may be a ribbon slot type optical fiber cable with a slot rod.
   According to this configuration, in the ribbon slot type optical fiber cable, it is possible to realize a cable capable of suppressing the transmission loss, inputting a high-power optical signal, and accommodating optical fiber ribbons at high density.
(4) The optical fiber cable according to (1) or (2) is a slotless type optical fiber cable having a cable core formed by stranding a plurality of the optical fiber ribbons and a cable sheath provided around the cable core.
   According to this configuration, since the slot rod is not provided, even when the same number of fibers as the ribbon slot type optical fiber cable is accommodated, it is possible to realize a cable with a smaller diameter and lighter weight.
(5) Each optical fiber may be configured with the core portion, a clad portion formed around the core portion, a primary coating layer covering the clad portion, and a secondary coating layer covering the primary coating layer, and
   a Young's modulus of a resin forming the primary coating layer may be 1.0 MPa or less and a Young's modulus of a resin forming the secondary coating layer may be 900 MPa or more.

According to this configuration, by using the optical fiber in which the primary layer is made of a resin with a low Young's modulus that has cushioning properties and the secondary layer is made of a resin with a high Young's modulus that is excellent in strength, it is possible to further suppress deterioration of transmission loss due to occurrence of micro bend loss and macro bend loss.

(6) The Young's modulus of the resin of the primary coating layer is 0.7 MPa or less.

According to this configuration, the transmission loss can be further suppressed.

### (Effect of Present Disclosure)

According to the present disclosure, it is possible to provide an optical fiber cable capable of suppressing transmission loss, inputting a high-power optical signal, and accommodating optical fiber ribbons at high density.

### (Details of Embodiments of Present Disclosure)

Specific examples of an optical fiber cable according to embodiments of the present disclosure will be described below with reference to the drawings. The present invention is not limited to these exemplifications, but is indicated by the scope of the claims, and is intended to include all modifications within the scope and meaning equivalent to the scope of the claims.

### (First Embodiment)

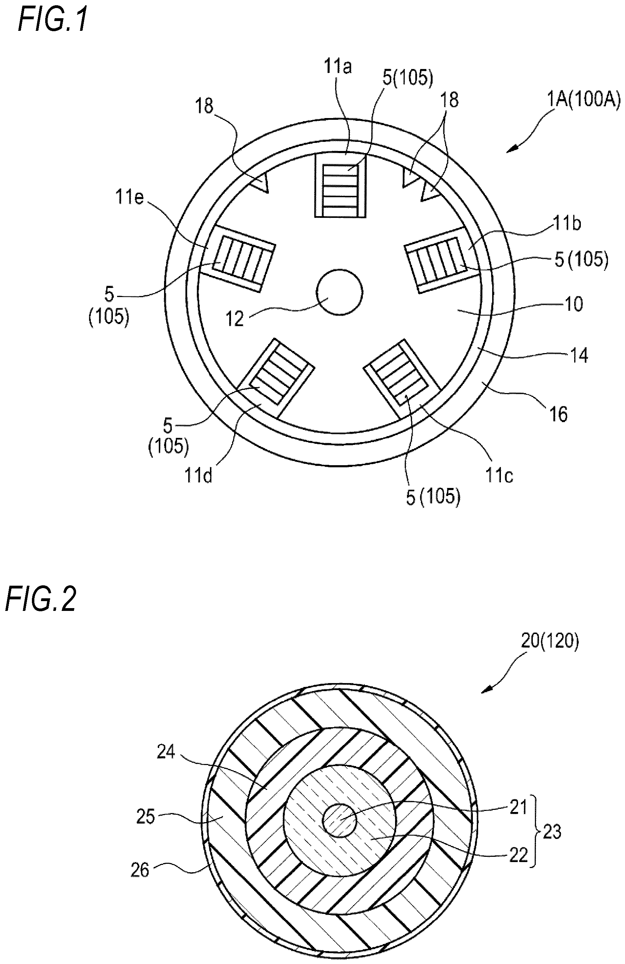

FIG. 1 is a cross-sectional view of an optical fiber cable 1A according to a first embodiment.

As illustrated in FIG. 1, the optical fiber cable 1A includes a slot rod 10, a tension member 12 embedded in a center of the slot rod 10, a wrapping tape 14 wound around the slot rod 10, and a sheath 16 that covers a circumference of the wrapping tape 14. The slot rod 10 is formed with a plurality (five in this example) of slot grooves 11 (11a to 11e: an example of internal space) capable of accommodating optical fiber ribbons 5 therein. A position identification mark 18 for identifying a position of the slot groove 11 is provided on an outer periphery of the slot rod 10. In addition, in the case of the first embodiment, the internal space corresponds to five slot grooves 11.

The slot rod 10 is an elongate body with a substantially circular cross section. The slot groove 11 is spirally formed on an outer peripheral surface of the slot rod 10 along a longitudinal direction. The spiral shape of the slot groove 11 may be a unidirectional spiral shape or an SZ shape that is periodically reversed. The optical fiber cable 1A is a ribbon slot type cable in which a plurality of optical fiber ribbons 5 are accommodated in the slot grooves 11. The optical fiber cable 1A illustrated in FIG. 1 exemplifies a 100-fiber ribbon slot type cable in which five 4-fiber optical fiber ribbons 5 are stacked and accommodated in each of the slot grooves 11a to 11e. By accommodating the optical fiber ribbon 5 in the slot groove 11, the optical fiber ribbon 5 may be stranded at a stranding pitch equal to a spiral pitch of the slot groove 11, for example, and twisted in accordance with a stranding direction of the slot groove 11.

Although illustration is omitted, the optical fiber ribbon 5 is formed by, for example, arranging four optical fibers in parallel. A tape coating, which is an adhesive resin made of, for example, an ultraviolet curable resin, is provided around the optical fibers arranged in parallel. The tape coating is continuously applied between adjacent optical fibers, and four optical fibers are integrated by the tape coating.

In addition, in the optical fiber cable 1A illustrated in FIG. 1, the shape of the slot groove 11 is formed in a rectangular shape, but is not limited to this. The shape of the slot groove 11 may be formed in a U shape, for example. Moreover, an accommodation form of the optical fiber ribbon 5 to be accommodated in the slot groove 11 is not limited to a form in which the plurality of optical fiber ribbons 5 are stacked. For example, the optical fiber ribbon 5 may be folded in a width direction, that is, in a direction in which the optical fibers are arranged in parallel, and then the plurality of optical fiber ribbons 5 may be accommodated. Further, the number of optical fibers forming the optical fiber ribbon is not limited to four, as long as the number of optical fibers is plural.

FIG. 2 is a cross-sectional view of an optical fiber 20 forming the optical fiber ribbon 5.

As illustrated in FIG. 2, the optical fiber 20 includes a glass fiber 23 configured with a core portion 21 and a clad portion 22, two coating layers 24 and 25 covering a circumference of the glass fiber 23, and a colored layer 26 covering a circumference of the coating layer 25. The inner coating layer 24 of the two coating layers is made of a cured product of a primary resin. The outer coating layer 25 of the two coating layers is made of a cured product of a secondary resin.

In the glass fiber 23, the core portion 21 is provided in a center of the glass fiber 23 and the clad portion 22 is provided to cover a circumference of the core portion 21. The core portion 21 is made of pure quartz containing no additives. The core portion 21 is formed to have an effective cross-sectional area (Aeff) of 110 µm² or more and 150 µm² or less at a wavelength of 1,550 nm.

A soft resin having a relatively low Young's modulus is used as a buffer layer for the primary resin that forms the inner primary coating layer 24 in contact with the glass fiber 23. A hard resin having a relatively high Young's modulus is used as a protective layer for the secondary resin that forms the outer secondary coating layer 25. The Young's modulus of the cured product of the primary resin is 1.0 MPa or less, preferably 0.7 MPa or less at room temperature (for example, 23°C). The young's modulus of the cured product of the secondary resin is 900 MPa or more, preferably 1,000 MPa or more, and more preferably 1,500 MPa or more at room temperature (for example, 23°C). An outer diameter of the optical fiber 20 is formed to be, for example, 220 µm or less.

In the optical fiber cable 1A having such a configuration, an occupation ratio of a total cross-sectional area, which is a sum of cross-sectional areas of the optical fiber ribbons 5 accommodated in each of the slot grooves 11a to 11e, with respect to a cross-sectional area of each of the slot grooves 1 1a to 11e, that is, a value calculated by "total cross-sectional area of optical fiber ribbons accommodated in each slot groove" / "cross-sectional area of each slot groove" is designed to be 25% or more and 55% or less.

In recent years, in order to cope with, for example, shift to the 5th generation mobile communication system (5G) and increased capacity of a backbone system due to increase in video information, the need for an optical fiber cable capable of efficiently transmitting a signal is increasing. In addition, the optical fiber cable is always required to have a smaller diameter and lighter weight from a viewpoint of securing conduit space and convenience during installation. However, when an occupation ratio (cross-sectional area of ribbon / cross-sectional area of slot groove for slot type cable, cross-sectional area of ribbon / inner cross-sectional area of sheath for slotless type cable) of optical fiber ribbons is extremely increased in pursuit of a smaller diameter, the optical fiber ribbon cannot move freely inside the slot groove or inside the sheath, and thus an external pressure received from a side wall increases micro bend loss and macro bend loss. Therefore, in order to ensure favorable transmission characteristics, it is necessary to keep the occupation ratio of the optical fiber ribbon within a predetermined range.

Therefore, in the optical fiber cable 1A according to the present embodiment, the core portion 21 of the optical fiber 20 is made of pure quartz, and the effective cross-sectional area of the core portion 21 is 110 µm² or more and 150 µm² or less. Further, the occupation ratio of the optical fiber ribbon 5 to the slot groove 11 calculated by the ratio of the cross-sectional area of the slot groove 11 (internal space) and the cross-sectional area of the optical fiber ribbon 5 is designed to be 25% or more and 55% or less. According to this configuration, since the core portion 21 of the optical fiber 20 is made of pure quartz containing no additives, for example, it is possible to suppress an increase in transmission loss induced by hydrogen gas, ultraviolet light rays, visible light rays, and the like as compared with ordinary germanium-doped quartz. Further, by increasing the effective cross-sectional area of the core portion of the optical fiber 20 to 110 µm² or more and 150 µm² or less, power density of an input optical signal can be lowered, and thus distortion of a signal waveform during transmission can be simplified (do not complicate distortion). This makes it possible to input high-power optical signals and provide an optical fiber cable suitable for long-distance transmission. There is a tendency that the larger the effective cross-sectional area, the more likely the loss is to increase, but if the occupation ratio is 25% or more and 55% or less, the loss does not increase so much. That is, by setting the occupation ratio of the optical fiber ribbon 5 to 55% or less with respect to the slot groove 11, the optical fiber 20 can move freely inside the slot groove 11 to some extent. Therefore, for example, when the optical fiber cable 1A is bent, an external pressure received from a side wall of the slot groove 11 is reduced, and thus bending loss (micro bend loss and macro bend loss) can be suppressed. Further, by setting the occupation ratio to 25% or more, high-density packaging of the optical fiber ribbons 5 can be ensured. Therefore, by setting the occupation ratio of the optical fiber ribbon 5 to 25% or more and 55% or less with respect to the slot groove 11, even when the effective cross-sectional area of the core portion 21 is increased, the optical fiber ribbon 5 can be accommodated at high density while maintaining favorable transmission characteristics.

Also, according to the optical fiber cable 1A, the optical fiber 20 is configured with the core portion 21, the clad portion 22 formed around the core portion 21, the primary coating layer 24 that coats the clad portion 22 with a resin, and the secondary coating layer 25 that coats the primary coating layer 24 with a resin. Further, a Young's modulus of the resin of the primary coating layer 24 is 1.0 MPa or less, and a Young's modulus of the resin of the secondary coating layer 25 is 900 MPa or more. According to this configuration, by using the optical fiber in which the primary coating layer 24 is made of a resin with a low Young's modulus that has cushioning properties and the secondary coating layer 25 is made of a resin with a high Young's modulus that is excellent in strength, it is possible to suppress deterioration of transmission loss due to occurrence of the micro bend loss and the macro bend loss.

Further, according to the optical fiber cable 1A, the transmission loss can be further suppressed by setting the Young's modulus of the resin of the primary coating layer 24 to 0.7 MPa or less.

### (First Example)

The optical fiber cable 1A according to the first embodiment will be described below with a specific example. In a first example, the optical fiber ribbon 5 formed using the optical fiber 20 having an effective cross-sectional area of 110 µm² at a wavelength of 1,550 nm is accommodated in the optical fiber cable 1A, and then a relationship between the occupation ratio (cross-sectional area of ribbon / cross-sectional area of slot groove) of the optical fiber ribbon 5 with respect to the slot groove 11 and the transmission characteristics after formation of the optical fiber cable was evaluated. Table 1 shows evaluation results.

In Table 1, optical fiber cables with sample numbers No. 1 to No. 6 with the optical fiber ribbon occupation ratio varying from 25% to 65% were produced, and then the transmission characteristics of each sample after the formation of the optical fiber cable were measured. In addition, the occupation ratio of the optical fiber ribbon in each slot groove is set to be the same. The transmission characteristics after the formation of the cable show a transmission loss value of signal light rays with a wavelength of 1,550 nm for the optical fiber 20. Regarding pass/fail determination of the transmission loss, transmission loss ≤ 0.21 dB/km was determined as "pass", and transmission loss > 0.21 dB/km was determined as "fail". The pass determination of the transmission loss in a general cable is ≤ 0.25 dB/km, but in the present example, the pass determination was set to ≤ 0.21 dB/km in order to meet a transmission loss requirement in a cable for long-distance transmission.

**[Table 1]**

| Optical fiber cable sample No. | Occupation ratio of optical fiber ribbon [%] | Transmission characteristics after cable formation [dB/km, λ = 1,550 nm] | Transmission loss determination |
|---|---|---|---|
| No. 1 | 25 | 0.170 | Pass |
| No. 2 | 35 | 0.170 | Pass |
| No. 3 | 45 | 0.170 | Pass |
| No. 4 | 55 | 0.180 | Pass |
| No. 5 | 60 | 0.240 | Fail |
| No. 6 | 65 | 0.320 | Fail |

As illustrated in Table 1, the optical fiber cables with the sample numbers No. 1 to No. 4, that is, the optical fiber cables with an optical fiber ribbon occupation ratio of 25% to 55%, have a transmission loss of ≤ 0.21 dB/km, and thus the pass/fail determination of the transmission loss was pass. On the other hand, the optical fiber cables with the sample numbers No. 5 and No. 6, that is, the optical fiber cables with an optical fiber ribbon occupation ratio of 60% or more, have a transmission loss of > 0.21 dB/km, and thus the pass/fail determination of the transmission loss was fail. As a result, even when using the optical fiber 20 with a large diameter (110 µm²), which tends to cause bending loss, by designing the "cross-sectional area of the optical fiber ribbon" and the "cross-sectional area of the slot groove" so that the occupation ratio of the optical fiber ribbon 5 is 55% or less, it was confirmed that the transmission characteristics after the formation of the cable can be improved and transmission loss requirements in a cable for long-distance transmission can be met. On the other hand, when the occupation ratio does not reach 25%, it is possible to maintain the pass of the pass/fail determination of the transmission loss, but it is not possible to achieve high density of the optical fiber ribbons 5.

From this result, it was confirmed that it is desirable to set the occupation ratio of the optical fiber ribbon 5 to the slot groove 11 to 25% or more and 55% or less.

### (Modification Example)

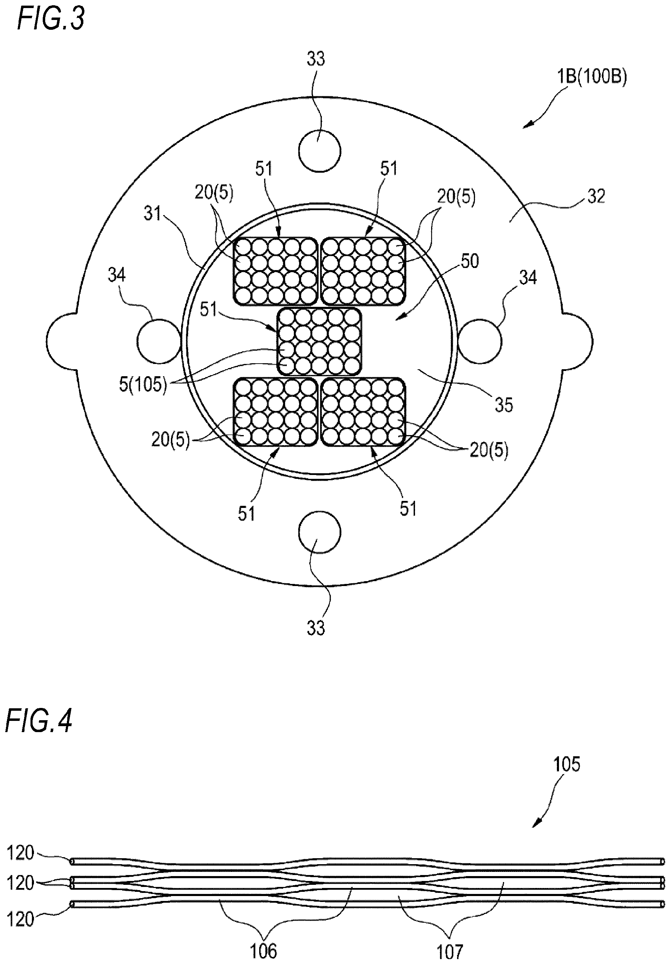

Next, a modification example of the optical fiber cable will be described with reference to FIG. 3.

FIG. 3 is a cross-sectional view of an optical fiber cable 1B according to the modification example. As illustrated in FIG. 3, the optical fiber cable 1B is a slotless type optical fiber cable.

The optical fiber cable 1B includes a cable core 50 configured by stranding a plurality of optical fiber ribbons 5, a wrapping tape 31 provided around the cable core 50, and a cable sheath 32 covering a circumference of the wrapping tape 31. A tension member 33 is provided in the cable sheath 32 along a longitudinal direction of the optical fiber cable 1B. Further, a tear string 34 is provided in the cable sheath 32 along the longitudinal direction of the optical fiber cable 1B. In addition, in the case of this modification example, an internal space corresponds to a space inside the cable sheath 32.

The cable core 50 of this example is formed by stranding a plurality of optical fiber units 51 (five in this example), which are bundled by stacking five 4-fiber optical fiber ribbons 5. Therefore, the optical fiber cable 1B of this example is a 100-fiber slotless type cable in which the cable core 50 formed of five optical fiber units 51 is accommodated in an internal space 35 formed inside the cable sheath 32 (wrapping tape 31). In addition, an accommodation form of the optical fiber ribbon 5 accommodated in the cable sheath 32 is not limited to a form in which the plurality of optical fiber ribbons 5 are stacked, and for example, the optical fiber ribbon 5 may be rolled up so as to be folded in a width direction and the plurality of optical fiber ribbons 5 may be stranded and accommodated.

The optical fiber ribbon 5 forming the cable core 50 has the same configuration as the optical fiber ribbon 5 described in the first embodiment. The optical fibers 20 forming the optical fiber ribbon 5 also have the same configuration as the optical fibers 20 described in the first embodiment. In the optical fiber cable 1B, an occupation ratio of a total cross-sectional area of the optical fiber ribbon 5 to a cross-sectional area of the internal space 35, that is, a value calculated by "total cross-sectional area of the optical fiber ribbon accommodated in the internal space" / "cross-sectional area of the internal space" is designed to be 25% or more and 55% or less, as similar to the optical fiber cable 1A of the first embodiment.

The slotless type optical fiber cable 1B having such a configuration exhibits the same effects as the ribbon slot type optical fiber cable 1A. Further, since the optical fiber cable 1B does not have a slot rod, even when the same number (100 fibers) of fibers are accommodated in the internal space 35, it is possible to realize a cable with a smaller diameter and lighter weight than the ribbon slot type optical fiber cable 1A.

### (Second Embodiment)

FIG. 4 is a plan view of an optical fiber ribbon 105 accommodated in optical fiber cables 100A and 100B (see FIGS. 1 and 3) according to a second embodiment.

As illustrated in FIG. 4, the optical fiber ribbon 105 is an intermittent connection type optical fiber ribbon in which, in a state in which four optical fibers 120 are arranged in parallel, a connecting portion 106 in which adjacent optical fibers are connected with an adhesive resin and a non-connecting portion 107 in which adjacent optical fibers are not connected are intermittently provided in a longitudinal direction. FIG. 4 illustrates the optical fiber ribbon 105 with the optical fibers 120 opened in an arrangement direction.

A configuration of the optical fiber 120 is the same as the configuration of the optical fiber 20 (see FIG. 2) in the first embodiment described above, and a core portion is made of pure quartz and an effective cross-sectional area (Aeff) of the core portion is 110 µm² or more and 150 µm² or less. Further, a Young's modulus of a cured product of a primary resin is 1.0 MPa or less, preferably 0.7 MPa or less at room temperature (for example, 23°C). A cured product of a secondary resin has a Young's modulus of 900 Mpa or more at room temperature (for example, 23°C).

In this example, locations where the connecting portions 106 and the non-connecting portions 107 are provided are between all the optical fibers, but are not limited to this, and may be between some of the optical fibers, for example. Further, the number of optical fibers forming the optical fiber ribbon is not limited to four, as long as the number of optical fibers is plural.

In the ribbon slot type optical fiber cable 100A using the intermittent connection type optical fiber ribbon 105, an occupation ratio of a total cross-sectional area of the optical fiber ribbons 105 accommodated in each of the slot grooves 11a to 11e to a cross-sectional area of each of the slot grooves 1 1a to 11e, that is, a value calculated by "total cross-sectional area of the optical fiber ribbons accommodated in each slot groove" / "cross-sectional area of each slot groove" is designed to be 25% or more and 60% or less. Further, in the slotless type optical fiber cable 100B using the intermittent connection type optical fiber ribbon 105, an occupation ratio of the total cross-sectional area of the optical fiber ribbons 105 to the cross-sectional area of the internal space 35, that is, a value calculated by "total cross-sectional area of the optical fiber ribbons accommodated in the internal space" / "cross-sectional area of the internal space" is designed to be 25% or more and 60% or less.

As described above, in the ribbon slot type optical fiber cable 100A and the slotless type optical fiber cable 100B according to the second embodiment, the optical fiber ribbon 105 accommodated in the optical fiber cables 100A and 100B is configured as the intermittent connection type optical fiber ribbon in which adjacent optical fibers 120 are connected by intermittently applying an adhesive resin therebetween, and the core portion 21 of the optical fiber 20 is made of pure quartz and the effective cross-sectional area of the core portion 21 is 110 µm² or more and 150 µm² or less. Further, the occupation ratio of the intermittent connection type optical fiber ribbon 105 with respect to the slot groove 11 or the internal space 35 is designed to be 25% or more and 60% or less. Thus, according to the optical fiber cables 100A and 100B, since the optical fiber ribbon 105 accommodated in the cable is an intermittent connection type and has flexibility, an upper limit of the occupation ratio of the optical fiber ribbon 105 with respect to the slot groove 11 or the internal space 35 can be increased up to 60% while maintaining suppression of the transmission loss and possibility of inputting high-power optical signals. This makes it possible to provide the optical fiber cables 100A and 100B capable of achieving even higher densities.

### (Second Example)

The optical fiber cables 100A and 100B according to the second embodiment will be described below with a specific example. As a second example, optical fiber cables with sample numbers No. 7 to No. 12 were produced in which an intermittent connection type optical fiber ribbon (optical fiber ribbon 105) formed using an optical fiber having an effective cross-sectional area of 110 µm² at a wavelength of 1,550 nm is accommodated in a slot groove and the occupation ratio of the optical fiber ribbon is varied from 25% to 65%. For each sample, similar to the first example, a relationship between the occupation ratio (cross-sectional area of ribbon / cross-sectional area of slot groove) of the intermittent connection type optical fiber ribbon with respect to the slot groove and the transmission characteristics after formation of the optical fiber cable was evaluated. The results are shown in Table 2.

**[Table 2]**

| Optical fiber cable sample No. | Occupation ratio of optical fiber ribbon [%] | Transmission characteristics after cable formation [dB/km, λ = 1,550 nm] | Transmission loss determination |
|---|---|---|---|
| No. 7 | 25 | 0.170 | Pass |
| No. 8 | 35 | 0.170 | Pass |
| No. 9 | 45 | 0.170 | Pass |
| No. 10 | 55 | 0.180 | Pass |
| No. 11 | 60 | 0.185 | Pass |
| No. 12 | 65 | 0.260 | Fail |

As illustrated in Table 2, the optical fiber cables with sample numbers No. 7 to No. 11, that is, the optical fiber cables in which an occupation ratio of the intermittent connection type optical fiber ribbon is 25% to 60% have a transmission loss of ≤ 0.21 dB/km, and thus the pass/fail determination of the transmission loss was pass. On the other hand, the optical fiber cable with sample number No. 12, that is, the optical fiber cable with an optical fiber ribbon occupation ratio of 65% or more has a transmission loss of > 0.21 dB/km, and thus the pass/fail determination of the transmission loss was fail. As a result, even when using the optical fiber 120 with a large diameter (110 µm²), which tends to cause bending loss, by designing the "cross-sectional area of the optical fiber ribbon" and the "cross-sectional area of the slot groove" so that the occupation ratio of the intermittent connection type optical fiber ribbon 105 is 60% or less, it was confirmed that the transmission characteristics after the formation of the cable can be improved and transmission loss requirements in a cable for long-distance transmission can be met. On the other hand, when the occupation ratio does not reach 25%, it is possible to maintain the pass of the pass/fail determination of the transmission loss, but it is not possible to achieve high density of the optical fiber ribbons 105.

From this result, it was confirmed that when the intermittent connection type optical fiber ribbon 105 is used, it is desirable to set the occupation ratio of the optical fiber ribbon 105 to the slot groove 11 to 25% or more and 60% or less.

Although the present disclosure is described in detail and with reference to specific embodiments, it will be apparent to those skilled in the art that various changes and modifications can be made without departing from the spirit and scope of the present disclosure. Also, the numbers, positions, shapes, and the like of the constituent members described above are not limited to those in the above embodiments, and can be changed to suitable numbers, positions, shapes, and the like in carrying out the present disclosure.

### REFERENCE SIGNS LIST

1A, 1B, 100A, 100B: optical fiber cable
5, 105: optical fiber ribbon
10: slot rod
11 (11a to 11e): slot groove (example of internal space)
12, 33: tension member
14, 31: wrapping tape
16: sheath
18: position identification mark
20, 120: optical fiber
21: core portion
22: clad portion
23: glass fiber
24: primary coating layer (primary resin)
25: secondary coating layer (secondary resin)
26: colored layer
32: cable sheath
34: tear string
35: internal space
50: cable core
51: optical fiber unit
106: connecting portion
107: non-connecting portion

## Claims

1. An optical fiber cable in which an optical fiber ribbon formed by parallelly arranging a plurality of optical fibers is packaged in an internal space, wherein
a core portion of each optical fiber is made of pure quartz and an effective cross-sectional area of the core portion at a wavelength of 1,550 nm is 110 µm² or more and 150 µm² or less,
the optical fiber ribbon is an optical fiber ribbon in which the optical fibers are connected by continuously applying an adhesive resin between adjacent optical fibers, and
an occupation ratio of the optical fiber ribbon to the internal space calculated from a ratio of a cross-sectional area of the internal space to a cross-sectional area of the packaged optical fiber ribbon is 25% or more and 55% or less.

2. An optical fiber cable in which an optical fiber ribbon formed by parallelly arranging a plurality of optical fibers is packaged in an internal space, wherein
a core portion of each optical fiber is made of pure quartz and an effective cross-sectional area of the core portion at a wavelength of 1,550 nm is 110 µm² or more and 150 µm² or less,
the optical fiber ribbon is an intermittent connection type optical fiber ribbon in which the optical fibers are connected by intermittently applying an adhesive resin between adjacent optical fibers, and
an occupation ratio of the optical fiber ribbon to the internal space calculated from a ratio of a cross-sectional area of the internal space to a cross-sectional area of the packaged optical fiber ribbon is 25% or more and 60% or less.

3. The optical fiber cable according to claim 1 or 2, wherein
the optical fiber cable is a ribbon slot type optical fiber cable with a slot rod.

4. The optical fiber cable according to claim 1 or 2, wherein
the optical fiber cable is a slotless type optical fiber cable having a cable core formed by stranding a plurality of the optical fiber ribbons and a cable sheath provided around the cable core.

5. The optical fiber cable according to any one of claims 1 to 4, wherein
each optical fiber is configured with the core portion, a clad portion formed around the core portion, a primary coating layer covering the clad portion, and a secondary coating layer covering the primary coating layer, and
a Young's modulus of a resin forming the primary coating layer is 1.0 MPa or less and a Young's modulus of a resin forming the secondary coating layer is 900 MPa or more.

6. The optical fiber cable according to claim 5, wherein
the Young's modulus of the resin of the primary coating layer is 0.7 MPa or less.
